# DEMANDE DE BREVET EUROPEEN

(11) **EP 1 098 465 A1**
(43) Date de publication de la demande: **09.05.2001**
(21) Numéro de dépôt: 00403013.6
(22) Date de dépôt: 30.10.2000
(51) Int. Cl.: H04J 14/02, H04Q 11/00

(54) **Procédé d'extraction de canal pour système de transmission optique à multiplex de longueurs d'onde et dispositifs appliquant ce procédé**

(30) Priorité: 08.11.1999 FR 9913977
(71) Demandeur: ALCATEL, 75008 Paris (FR)
(72) Inventeur: Ottolenghi, Paolo, 23875 Osnago (IT); Sotom, Michel, 31000 Toulouse (FR)
(74) Mandataire: Sciaux, Edmond

(57) **Abrégé**

Un dispositif d'extraction et d'insertion selon cette invention reçoit une lumière d'entrée portant un multiplex amont et il inclut :
- un coupleur de prélèvement KA séparant cette lumière en une fraction prélevée et une fraction non prélevée sans sélection spectrale,
- un port de sortie d'extraction PB recevant cette fraction prélevée et fournissant en sortie du dispositif une lumière d'extraction,
- un ensemble réjecteur de transit RT recevant la fraction non prélevée et la restituant après en avoir éliminé un groupe d'extraction incluant l'un au moins des canaux du multiplex amont, et
- un coupleur d'insertion KB recevant d'une part la lumière issue de l'ensemble réjecteur de transit RT, d'autre part une lumière d'insertion, et fournissant en sortie du dispositif une lumière portant un multiplex aval.

L'invention s'applique aux télécommunications.

## Description

Cette invention concerne les réseaux de transmission optique utilisant des multiplex de longueurs d'onde. Elle concerne plus particulièrement des opérations d'extraction et/ou d'insertion sélectives d'un ou plusieurs canaux d'un tel multiplex.

Des dispositifs d'extraction et d'insertion aptes à effectuer de telles opérations sont généralement appelés OADM ou Optical Add Drop Multiplexer c'est à dire multiplexeur optique d'insertion-extraction. Ils sont habituellement installés dans les noeuds d'un réseau de télécommunication à fibres optiques pour y assurer des fonctions de routage ou d'aiguillage. Ils permettent par exemple de modifier des informations qui sont portées par un ou plusieurs des canaux d'un multiplex.

Plus précisément un tel réseau reçoit plusieurs informations à transmettre et il les fait respectivement porter par plusieurs ondes optiques dont les longueurs d'onde définissent plusieurs canaux répartis dans un domaine spectral de ce réseau. Classiquement, cette opération est décrite comme étant une injection de ces informations dans ces canaux, le mot canal désignant aussi bien un intervalle spectral qu'une onde optique modulée dont les longueurs d'onde sont incluses dans cet intervalle. L'assemblage de plusieurs tels canaux constitue un multiplex. De tels multiplex sont transmis entre les noeuds du réseau par une ligne constituée de fibres optiques. Lorsqu'un noeud du réseau et plus particulièrement considéré et lorsqu'il reçoit un tel multiplex, ce dernier sera appelé ci-après, à propos de ce noeud, « un multiplex amont ». Un dispositif d'extraction et d'insertion de ce noeud reçoit ce multiplex amont et sépare les canaux de ce dernier en un groupe d'extraction et un groupe de transit. Ce groupe d'extraction est typiquement extrait du réseau à partir de ce noeud, les informations qu'il portait étant par exemple exploitées localement. Puis ce même dispositif assemble ce groupe de transit avec un groupe d'insertion constitué lui aussi par des canaux inclus dans le domaine spectral du réseau et formé dans ce noeud pour porter d'autres informations. Il constitue ainsi un multiplex aval dans lequel ce groupe d'insertion prend en général, au moins pour partie, la place spectrale que le groupe d'extraction avait dans le multiplex amont. Ce multiplex aval est transmis à d'autres noeuds du réseau.

Dans un tel réseau de transmission il est souhaité que chaque multiplex soit équilibré, c'est à dire que tous les canaux de ce multiplex aient sensiblement une même puissance. Dans le cas usuel où le multiplex amont reçu par un tel dispositif est équilibré un problème général est donc d'assurer aussi l'équilibrage du multiplex aval.

De tels dispositifs sont notamment connus des documents de brevet EP-A 0 838 918 et WO 96/19884.

Dans ces deux premiers dispositifs connus la séparation des canaux du multiplex amont en deux groupes est assurée à l'aide d'un filtre optique qui réfléchit l'un de ces groupes et transmet l'autre. Un tel filtre est désigné Fpk et 33 respectivement dans ce premier et ce deuxième documents.

Un troisième dispositif est connu par un article de F. Shehadeh, R.S. Vodhanel, M. Krain, C. Gibbons, R. E. Wagner, et M. Ali : "Gain-Equalized, Eight-Wavelength WDM Optical Add-Drop Mutiplexer with an 8-dB Dynamic Range", IEEE Photonics Technology Letters, vol.7, N°9 September 1995 pp. 1075-1077. Dans ce dispositif les canaux du multiplex issu des organes d'extraction et d'insertion sont séparés les uns des autres dans un démultiplexeur, puis la puissance de chacun de ces canaux est-ajustée à une valeur commune, enfin ces canaux sont superposés pour constituer un multiplex aval équilibré. Cette solution a l'inconvénient d'être coûteuse.

De manière générale les dispositifs connus de ce genre présente l'inconvénient qu'il est coûteux d'assurer l'équilibrage du multiplex aval surtout lorsque les nombres de canaux du domaine spectral et du groupe d'extraction, deviennent importants. De plus le passage des ondes optiques à travers une succession d'organes spectralement sélectifs en série tend à réduire la bande passante disponible pour chacun des canaux.

Le document EP 0 964 275 décrit un dispositif multiplexeur à insertion-extraction optique, qui comprend un séparateur optique recevant un signal d'entrée qui inclut au moins un sous-groupe de tous les canaux. Le séparateur optique a un taux de séparation non équilibré - dans une proportion allant de 60:40 à 90:10 - pour fournir une première fraction de puissance principale (60% à 90%) du signal optique d'entrée à un premier port de sortie et une seconde fraction de puissance (40% à 10%) du signal d'entrée à un second port de sortie. La seconde fraction de puissance est reçue par un démultiplexeur où des canaux sont extraits. La fraction de puissance principale définit un signal de transit qui est envoyé du séparateur optique vers un coupleur optique avec un signal d'addition provenant d'un multiplexeur. Le coupleur optique a un taux de couplage non équilibré - dans une proportion allant de 60:40 à 90:10 - de sorte qu'il produit un signal de sortie constitué de manière prédominante par le signal de transit.

Des étages constitués respectivement de réseaux de Bragg sont placés entre le séparateur optique et le coupleur optique, réfléchissant sélectivement les canaux retirés du signal transmis. Un isolateur optique est positionné avant le séparateur optique, supprimant les canaux rétro-réfléchis.

Ce dispositif connu a pour inconvénient de causer des pertes non négligeables, sur le signal transmis, car elles augmentent proportionnellement avec le nombre d'étages, et donc proportionnellement avec le nombre de canaux utilisés. Par ailleurs, il n'est pas facile de reconfigurer les canaux de transit et les canaux extraits.

La présente invention a notamment les buts suivants :
- équilibrer d'une manière peu coûteuse le multiplex aval sortant d'un dispositif d'extraction et d'insertion lorsqu'un multiplex amont reçu par ce dispositif est équilibré,
- conserver la largeur de la bande passante disponible pour chacun des canaux d'un tel multiplex,
- limiter les pertes pour les canaux du groupe de transit, et
- faciliter la reconfiguration des canaux.

Pour atteindre ces buts elle a notamment pour objet un procédé d'extraction de canal pour système de transmission optique à multiplex de longueurs d'onde, ce procédé incluant les opérations de :
- réception d'une lumière d'entrée de ligne portant un multiplex amont constitué par une pluralité de canaux ayant des étendues respectives mutuellement séparées dans le spectre des longueurs d'ondes,
- séparation de cette lumière d'entrée de ligne en deux fractions constituant respectivement une fraction prélevée et une fraction non prélevée de cette lumière, par une opération non sélective en longueur d'onde,
- utilisation de cette fraction prélevée pour former une lumière d'extraction portant un groupe d'extraction incluant l'un au moins des dits canaux du multiplex amont, et
- opération sélective en longueur d'onde effectuée sur la fraction non prélevée de la lumière d'entrée de ligne pour en éliminer ledit groupe d'extraction avant de former une lumière de transit portant un groupe de transit constitué par ceux des canaux du multiplex amont qui ne sont pas inclus dans le groupe d'extraction ;
**caractérisé** en ce que l'opération sélective en longueurs d'onde est un filtrage portant sur au moins un groupe de canaux de canaux filtrés simultanément, et en ce que le choix du groupe ou des groupes de canaux filtrés est reconfigurable.

L'opération sélective qui est effectuée selon cette invention sur la fraction non prélevée de la lumière d'entrée de ligne réalise sinon une deuxième séparation du moins une distinction : elle distingue dans la fraction non prélevée une fraction indésirable et une fraction de transit, seule cette dernière devant être ensuite utilisée pour constituer la lumière de transit. A titre d'exemples la première de ces deux fractions, la fraction indésirable, peut être réfléchie, la deuxième étant alors transmise. Elle peut aussi être transmise, la deuxième étant alors réfléchie ou déviée. Cette première fraction peut aussi être déviée, la deuxième n'étant alors pas déviée ou l'étant dans une autre direction. Elle peut encore être absorbée, la deuxième étant alors transmise ou réfléchie.

Un premier avantage de ce procédé est une réduction des pertes de transmission pour un nombre total de canaux donné, parce le filtrage multicanal sur n canaux simultanément permet de diviser par n le nombre d'étages nécessaires en cascade sur le chemin de la lumière de transit.

Un second avantage de ce procédé tient au fait que, à partir de l'instant où la fraction indésirable est distinguée par le filtre, elle n'a plus aucune utilité puisqu'elle n'interviendra pas dans la formation de la lumière d'extraction. Pour le réalisateur de ce filtre ce fait évite certaines contraintes qui s'imposeraient à lui si cette fraction devait intervenir dans la formation du groupe d'extraction ou du multiplex aval. Dans ce cas il devrait en effet réaliser ce filtre de manière que cette fraction soit exemptée aussi complètement que possible de toute altération spectrale. Par rapport à ce cas, l'absence de ces contraintes permet de choisir les caractéristiques de ce filtre de manière à obtenir l'un au moins des avantages suivants :
- diminuer le coût de réalisation du filtre,
- éviter plus complètement une altération spectrale de la lumière de transit,
- équilibrer plus exactement les puissances des canaux du groupe de transit,
- diminuer la largeur des intervalles spectraux entre canaux.

Il est généralement préférable que l'opération de séparation de la lumière d'entrée de ligne en deux fractions donne à la fraction prélevée de cette lumière une puissance plus faible qu'à sa fraction non prélevée. Ceci tient au fait qu'une faible valeur de la puissance prélevée sur cette lumière permet de limiter le gain des amplificateurs qui doivent en général être disposés sur la branche de transit pour maintenir un niveau de puissance convenable de la lumière qui y est guidée, alors que, d'une part, ces amplificateurs introduisent dans cette lumière un bruit croissant avec leurs gains et que, d'autre part, c'est en général cette lumière qui porte la plus grande partie du débit d'informations du multiplex amont et qui transitera par le plus grand nombre de noeuds du réseau.

Typiquement une opération sélective en longueur d'onde est effectuée sur la fraction prélevée de la lumière d'entrée de ligne pour en éliminer ledit groupe de transit avant l'utilisation de cette fraction.

L'invention a aussi pour objet un dispositif d'extraction de canal pour système de transmission optique à multiplex de longueurs d'onde, ce dispositif ayant un domaine spectral et étant constitué à l'aide de guides de lumière,
- un port d'entrée de ligne pour recevoir une lumière d'entrée de ligne portant un multiplex amont constitué par une pluralité de canaux ayant des étendues respectives mutuellement séparées dans ledit domaine spectral du dispositif,
- un coupleur de prélèvement alimenté à partir de ce port d'entrée de ligne et adapté à séparer cette lumière d'entrée en deux fractions constituant respectivement une fraction prélevée et une fraction non prélevée et à diriger ces deux fractions respectivement sur une branche de prélèvement et sur une branche de transit, ce coupleur étant dépourvu de sélectivité spectrale.
- un port de sortie d'extraction disposé sur ladite branche de prélèvement pour fournir en sortie du dit dispositif une lumière d'extraction portant un groupe d'extraction incluant l'un au moins des dits canaux du multiplex amont,
- un ensemble réjecteur de transit disposé sur ladite branche de transit pour recevoir ladite fraction non prélevée de la lumière d'entrée de ligne et pour restituer cette fraction après en avoir éliminé ledit groupe d'extraction, et
- un port de sortie de transit alimenté par ledit ensemble réjecteur de transit pour fournir en sortie du dit dispositif une lumière de sortie de transit portant un groupe de transit constitué par ceux des dits canaux du multiplex amont qui ne sont pas inclus dans ledit groupe d'extraction ;
**caractérisé** en ce que l'ensemble réjecteur de transit comporte des moyens pour filtrer au moins un groupe de canaux simultanément, et en ce que ce que ces moyens pour filtrer comportent des moyens de commutation pour permettre de choisir un groupe ou des groupes de canaux à filtrer.

A l'aide des figures schématiques ci-jointes on va décrire ci-après à titre d'exemples diverses possibilités de mise en oeuvre de cette invention. Lorsqu'un élément apparaît sur plusieurs figures il y est désigné par les mêmes lettres et/ou chiffres de référence.

La figure 1 représente une configuration de principe d'un dispositif d'extraction de canal selon cette invention.

La figure 2 représente un dispositif d'extraction et d'insertion de canal selon cette invention.

La figure 3 représente un ensemble réjecteur du dispositif de la figure 2. Des dispositifs selon cette invention sont constitués à l'aide de guides de lumière. Ces guides peuvent être formés dans des substrats ou présenter la forme de fibres optiques. Ils sont représentés sur les figures par des traits épais. Ces dispositifs sont typiquement incorporés dans des noeuds d'un réseau de transmission à fibres optiques. Un tel réseau utilise un ensemble de canaux de longueurs d'onde dont l'ensemble constitue un domaine spectral de ce réseau et de ces dispositifs.

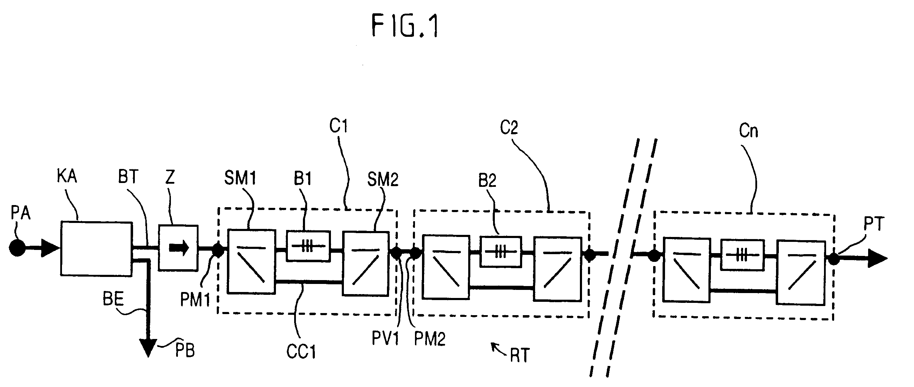

Conformément à la figure 1 un dispositif d'extraction de canal selon cette invention inclut les éléments principaux suivants :
- Un port d'entrée de ligne PA pour recevoir une lumière d'entrée de ligne portant un multiplex amont. Ce multiplex est constitué par une pluralité de canaux ayant des étendues respectives mutuellement séparées dans le domaine spectral du dispositif.
- Un coupleur de prélèvement KA alimenté à partir de ce port d'entrée de ligne et adapté à séparer cette lumière d'entrée en deux fractions constituant respectivement une fraction prélevée et une fraction non prélevée et à diriger ces deux fractions respectivement sur une branche de prélèvement BE et sur une branche de transit BT. Selon cette invention ce coupleur est choisi de manière à être autant que possible dépourvu de sélectivité spectrale. Il en résulte que chacune des deux dites fractions de la lumière d'entrée de ligne porte tous les canaux du multiplex amont et que les puissances respectives des ondes occupant ces canaux sont dans les mêmes rapports dans ces fractions que dans ce multiplex.
- Un port de sortie d'extraction PB disposé sur la branche de prélèvement BE pour fournir en sortie du dispositif une lumière d'extraction portant un groupe d'extraction incluant l'un au moins des canaux du multiplex amont.
- Un ensemble réjecteur de transit RT disposé sur la branche de transit BT pour recevoir la fraction non prélevée de la lumière d'entrée de ligne. Cet ensemble a une sélectivité spectrale telle qu'il ne restitue cette fraction qu'après en avoir éliminé le groupe d'extraction.
- Enfin un port de sortie de transit PT alimenté par l'ensemble réjecteur de transit RT pour fournir en sortie du dispositif une lumière, dite ci-après « de sortie de transit », portant un groupe de transit constitué par ceux des canaux du multiplex amont qui ne sont pas inclus dans le groupe d'extraction.

Les canaux du groupe d'extraction pourraient être prédéterminés lors de la fabrication du dispositif de cette invention. Cependant, selon une disposition préférée ayant pour but de répondre au mieux aux besoins des réalisateurs de réseaux de télécommunications à fibres optiques, l'ensemble réjecteur de transit RT reçoit des signaux de commande d'extraction CE désignant un groupe incluant l'un au moins des canaux du domaine spectral du dispositif. Il est agencé pour ne restituer la fraction non prélevée de la lumière d'entrée de ligne qu'après en avoir éliminé le groupe désigné par ces signaux. Ce groupe désigné constitue donc ledit groupe d'extraction.

De préférence le coupleur de prélèvement KA a un rapport de prélèvement inférieur à 50% et de préférence encore compris entre 1% et 35%, ce rapport étant le rapport de la puissance de la fraction prélevée de la lumière d'entrée de ligne à la puissance totale des deux fractions prélevée et non prélevée de cette lumière. Ce coupleur est par exemple un coupleur à fibres optiques du type réalisé par fusion et étirage. Le choix de ce type connu de coupleur pour constituer le coupleur de prélèvement permet de limiter à la fois le coût de ce coupleur et les pertes supplémentaires de lumière qu'il provoque au delà de celles qui résultent directement du prélèvement. Le rapport de prélèvement défini ci-dessus est alors à peu près égal à celui de la puissance optique prélevée par ce coupleur à la puissance optique reçue par lui. Il est par exemple voisin de 10%.

Pour préciser la constitution de l'ensemble réjecteur de transit RT il convient de définir sur la branche de transit BT un sens dit « direct » allant du coupleur de prélèvement KA au port de sortie de transit PT, ce qui définit en outre :
- un sens inverse opposé à ce sens direct, et
- deux côtés mutuellement opposés pour chaque segment de cette branche, ces deux côtés constituant respectivement un côté amont et un côté aval tels que ledit sens direct aille dans ce segment dudit côté amont audit côté aval.

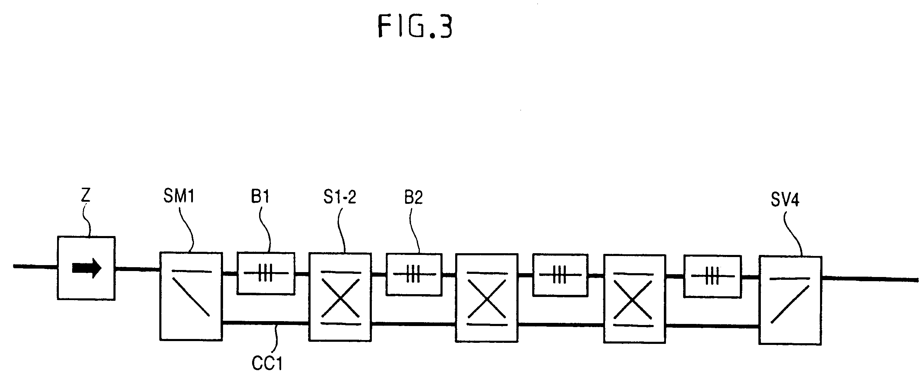

De préférence cet ensemble inclut alors les éléments suivants raccordés optiquement en série et se succédant selon le sens direct (voir figure 3) :
- un isolateur optique Z apte à éliminer la lumière se propageant dans le sens inverse, et
- une succession de cellules à réflexion sélective raccordées optiquement en série C1, C2 ... Cn.

Ces cellules ont des bandes de réflexion respectives incluant chacune l'un au moins des canaux du domaine spectral du dispositif. Ces bandes peuvent être prédéterminées mais elles peuvent aussi être ajustables. Leur ensemble inclut tous les canaux susceptibles d'être inclus dans le groupe d'extraction. Chaque canal de ce domaine inclus dans la bande de réflexion de l'une quelconque de ces cellules sera désigné ci-après comme étant associé à cette cellule. Chacune de ces cellules est apte à être mise alternativement dans un état actif et dans un état passif. Cet état actif impose à cette cellule de réfléchir la lumière des canaux qui lui sont associés et de transmettre la lumière des autres canaux du domaine spectral du dispositif et cet état passif lui impose de transmettre la lumière de tous les canaux de ce domaine. Cette cellule reçoit l'un des signaux de commande d'extraction CE, ce signal étant affecté à cette cellule et désignant les canaux qui lui sont associés. Elle répond à ce signal en prenant son état actif et à l'absence de ce signal en prenant son état passif

Selon une variante, chacune des cellules d'une telle succession est mise définitivement dans l'un de ses deux états actif et passif lors de la fabrication du dispositif.

Typiquement les canaux du domaine spectral du dispositif forment une suite sensiblement régulière dans le spectre des longueurs d'onde, cette suite étant dite ci-après « spectrale ». De préférence l'une au moins des cellules à réflexion sélective C1, C2 ... Cn est associée à une pluralité de canaux, une telle cellule étant dite ci-après « multicanal », les canaux qui lui sont associés sont consécutifs dans ladite suite spectrale, et leur nombre est au plus égal à huit. Ce nombre est choisi en fonction des caractéristiques du réseau de transmission qui incorpore le dispositif de l'invention. Il en est de même du nombre des cellules à réflexion sélective et, dans ce dernier nombre, de celui des cellules multicanal. Dans un mode de mise en oeuvre préféré de cette invention, le domaine spectral du dispositif, et donc aussi, sauf exception, le multiplex amont, comportent quatre-vingt canaux. Les fréquences optiques, c'est à dire celles qui correspondent aux longueurs d'onde centrales de ces canaux, sont régulièrement étagées avec un pas pouvant être 50 GHz ou un multiple de 50 GHz. Les cellules à réflexion sélective C1, C2, ..., Cn sont au nombre de quatre, et chacune de ces cellules est associée à quatre canaux.

De préférence chaque cellule à réflexion sélective telle que C1 inclut :
- au moins par équivalence un port amont PM1 et un port aval PV1 (voir figure 1) par l'intermédiaire desquels cette cellule est raccordée en série dans la succession de telles cellules,
- un guide de lumière B1 constituant un guide de réflexion et incluant en série un réflecteur de Bragg imposant la bande de réflexion de cette cellule,
- un guide de lumière CC1 constituant un guide de court-circuit, et
- un ensemble de commutation de cette cellule.

Cet ensemble est représenté sur la figure 1 comme incluant un commutateur amont SM1 et un commutateur aval SV1. Selon le signal de commande qu'il reçoit, il connecte sélectivement, entre les ports amont PM1 et aval PV1 de cette cellule, :
- soit le guide de réflexion B1 pour mettre cette cellule dans son dit état actif,
- soit le guide de court-circuit CC1 pour la mettre dans son dit état passif.

Ces connecteurs symbolisent sur cette figure une partie amont SM1 et une partie aval SV1 de cet ensemble, ces deux parties étant raccordées respectivement à ces ports amont et aval.

La succession de cellules à réflexion sélective C1, C2 ... Cn fait apparaître des paires de cellules. Chacune de ces paires est formée par deux cellules C1, C2 qui sont consécutives dans cette succession et qui constituent une cellule amont C1 et une cellule aval C2 de cette paire. De préférence, pour chaque telle paire telle que C1, C2, la partie aval SV1 de l'ensemble de commutation de la cellule amont C1 et la partie amont SM2 de l'ensemble de commutation de la cellule aval C2 sont formées par un même commutateur optique du type 2X2 constituant un commutateur de paire tel que S1-2 et affecté à cette paire. Le port aval de cette cellule amont et le port amont de cette cellule aval sont alors inclus au moins virtuellement dans ce commutateur de paire.

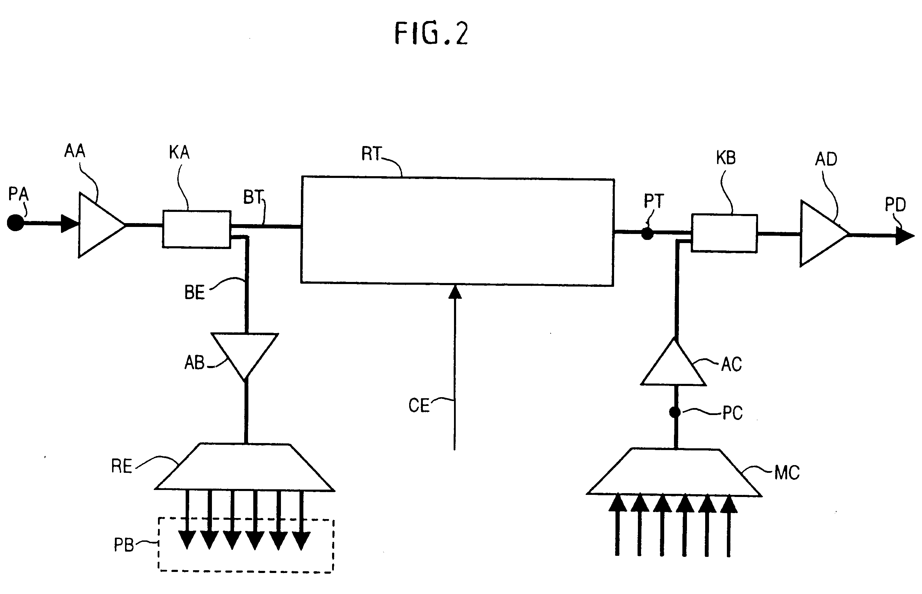

De préférence le dispositif inclut un ensemble sélecteur d'extraction RE (voir figure2) disposé sur la branche de prélèvement BE entre le coupleur de prélèvement KA et le port de sortie d'extraction PB pour recevoir la fraction prélevée de la lumière d'entrée de ligne, cet ensemble étant commandé pour transmettre sélectivement certains au moins des canaux du multiplex amont.

Cet ensemble pourrait être constitué de la même manière que l'ensemble réjecteur de transit RT. Chaque signal de commande d'extraction commanderait alors deux cellules à réflexion sélective appartenant respectivement à ces deux ensembles et ces deux cellules auraient une même bande de réflexion. Mais elles seraient agencées pour que l'une soit mise dans son état actif quand l'autre serait mise dans son état passif et réciproquement. Cette disposition pourrait être préférée par exemple si le nombre total de canaux du domaine spectral du dispositif était suffisamment petit, par exemple égal à seize, et si le nombre de canaux à extraire, c'est à dire des canaux susceptibles d'être inclus dans le groupe d'extraction était égal à ce nombre total.

Dans le cas plus typique où ce nombre total est un nombre plus important tel que quatre-vingt, et où le nombre de canaux à extraire est très inférieur à ce nombre total et par exemple égal à seize, l'ensemble sélecteur d'extraction RE peut être constitué, comme illustré par la figure 2, par un démultiplexeur éliminant les canaux qui ne sont jamais à extraire et comportant un port de sortie pour chacun des canaux à extraire. C'est alors l'ensemble de ces ports de sortie qui joue le rôle du port de sortie d'extraction PB précédemment considéré. Ces ports pourraient être raccordés à un ensemble d'interrupteurs optiques.

La présente invention a également pour objet un dispositif d'extraction et d'insertion de canal pour système de transmission optique à multiplex de longueurs d'onde. Ce dispositif inclut un dispositif d'insertion de canal tel que précédemment décrit. Il inclut en outre les éléments principaux suivants :
- Un port d'entrée d'insertion PC pour recevoir une lumière d'entrée d'insertion portant un groupe d'insertion constitué par certains au moins des canaux du groupe d'extraction. Cette lumière est par exemple fournie par un multiplexeur MC qui reçoit sur chacune de ses entrées une onde optique modulée par une information à transmettre et occupant l'un de ces canaux.
- Un coupleur d'insertion KB alimenté à partir de ce port d'entrée d'insertion et à partir du port de sortie de transit PT.
- Enfin un port de sortie de ligne PD alimenté à partir de ce coupleur d'insertion pour fournir en sortie du dispositif d'extraction et d'insertion une lumière de sortie de ligne portant un multiplex aval constitué par les groupes de transit et d'insertion.

Ce dispositif comporte en outre typiquement des amplificateurs optiques pour donner à la lumière un niveau de puissance convenable à l'entrée de chacun de ses organes. Ces amplificateurs incluent de préférence :
- un amplificateur d'entrée de ligne AA en entrée du coupleur de prélèvement KA,
- un amplificateur de prélèvement AB entre ce coupleur et l'ensemble sélecteur d'extraction RE,
- un amplificateur d'insertion AC entre le port d'entrée d'insertion PC et le coupleur d'insertion KB, et
- un amplificateur de sortie de ligne AD en sortie de ce coupleur.

Typiquement les canaux du groupe d'insertion sont les mêmes que ceux du groupe d'extraction, c'est à dire qu'ils occupent les mêmes étendues dans le spectre des longueurs d'onde. Mais il est clair que les informations qui sont portées par les canaux de l'un de ces groupes ne sont, sauf exception, pas les mêmes que celles qui sont portées par l'autre. Les canaux du multiplex aval sont alors les mêmes que ceux du multiplex amont.

La présence de l'ensemble réjecteur de transit RT sur la branche de transit pourrait être utile même dans le cas où aucun canal ne serait à extraire du multiplex amont, mais où un canal inclus dans le domaine spectral du dispositif serait absent de ce multiplex et devrait être inséré dans le multiplex aval. Dans un tel cas cet ensemble réjecteur pourrait être utile en éliminant le bruit ou des signaux parasites qui seraient présents dans la lumière d'entrée de ligne dans l'étendue spectrale de ce canal à insérer.

Lorsqu'un dispositif réalisé selon cette invention est inclus dans un noeud d'un réseau de transmission à fibres optiques, ce noeud peut inclure un ensemble d'émetteurs accordables pour recevoir les informations à faire porter par le groupe d'insertion et pour les faire porter par des ondes optiques émises par cet ensemble sur les longueurs d'ondes centrales des canaux de ce groupe. Ce noeud peut aussi inclure un organe de commande d'extraction et d'insertion qui à la fois, d'une part fournit les dits signaux de commande d'extraction, et d'autre part commande en accord avec ces signaux les longueurs d'onde émises par les émetteurs de cet ensemble.

## Revendications

1. Procédé d'extraction de canal pour système de transmission optique à multiplex de longueurs d'onde, ce procédé incluant les opérations de :
- réception d'une lumière d'entrée de ligne portant un multiplex amont constitué par une pluralité de canaux ayant des étendues respectives mutuellement séparées dans le spectre des longueurs d'ondes,
- séparation de cette lumière d'entrée de ligne en deux fractions constituant respectivement une fraction prélevée et une fraction non prélevée de cette lumière, par une opération non sélective en longueur d'onde,
- utilisation de cette fraction prélevée pour former une lumière d'extraction portant un groupe d'extraction incluant l'un au moins des dits canaux du multiplex amont, et
- opération sélective en longueur d'onde effectuée sur la fraction non prélevée de la lumière d'entrée de ligne pour en éliminer ledit groupe d'extraction avant de former une lumière de transit portant un groupe de transit constitué par ceux des canaux du multiplex amont qui ne sont pas inclus dans le groupe d'extraction ;
**caractérisé** en ce que l'opération sélective en longueurs d'onde est un filtrage portant sur au moins un groupe de canaux de canaux filtrés simultanément, et en ce que le choix du groupe ou des groupes de canaux filtrés est reconfigurable.

2. Procédé d'extraction de canal selon la revendication 1, ce procédé étant caractérisé par le fait que ladite opération de séparation de la lumière d'entrée de ligne en deux fractions donne à ladite fraction prélevée de cette lumière une puissance plus faible qu'à sa dite fraction non prélevée.

3. Dispositif d'extraction de canal pour système de transmission optique à multiplex de longueurs d'onde, ce dispositif ayant un domaine spectral et étant constitué à l'aide de guides de lumière,
- un port d'entrée de ligne (PA) pour recevoir une lumière d'entrée de ligne portant un multiplex amont constitué par une pluralité de canaux ayant des étendues respectives mutuellement séparées dans ledit domaine spectral du dispositif,
- un coupleur de prélèvement (KA) alimenté à partir de ce port d'entrée de ligne et adapté à séparer cette lumière d'entrée en deux fractions constituant respectivement une fraction prélevée et une fraction non prélevée et à diriger ces deux fractions respectivement sur une branche de prélèvement (BE) et sur une branche de transit (BT), ce coupleur étant dépourvu de sélectivité spectrale.
- un port de sortie d'extraction (PB) disposé sur ladite branche de prélèvement (BE) pour fournir en sortie du dit dispositif une lumière d'extraction portant un groupe d'extraction incluant l'un au moins des dits canaux du multiplex amont,
- un ensemble réjecteur de transit (RT) disposé sur ladite branche de transit (BT) pour recevoir ladite fraction non prélevée de la lumière d'entrée de ligne et pour restituer cette fraction après en avoir éliminé ledit groupe d'extraction, et
- un port de sortie de transit (PT) alimenté par ledit ensemble réjecteur de transit (RT) pour fournir en sortie du dit dispositif une lumière de sortie de transit portant un groupe de transit constitué par ceux des dits canaux du multiplex amont qui ne sont pas inclus dans ledit groupe d'extraction ;
**caractérisé** en ce que l'ensemble réjecteur de transit (RT) comporte des moyens (C1,...., Cn) pour filtrer au moins un groupe de canaux simultanément, et en ce que ce que ces moyens pour filtrer comportent des moyens de commutation (SM1, SM2) pour permettre de choisir un groupe ou des groupes de canaux à filtrer.

4. Dispositif d'extraction de canal selon la revendication 3, ce dispositif étant caractérisé par le fait que ledit ensemble réjecteur de transit (RT) est disposé pour recevoir des signaux de commande d'extraction (CE) désignant un groupe incluant l'un au moins des dits canaux du domaine spectral du dispositif, cet ensemble étant agencé pour restituer ladite fraction non prélevée de la lumière d'entrée de ligne après en avoir éliminé le groupe désigné par ces signaux.

5. Dispositif d'extraction selon la revendication 3, ce dispositif étant caractérisé par le fait que ledit coupleur de prélèvement (KA) a un rapport de prélèvement inférieur à 50%, ce rapport étant le rapport de la puissance de ladite fraction prélevée de la lumière d'entrée de ligne à la puissance totale des deux dites fractions prélevée et non prélevée de cette lumière.

6. Dispositif d'extraction selon la revendication 5, ce dispositif étant caractérisé par le fait que ledit rapport de prélèvement est compris entre 1% et 35%.

7. Dispositif d'extraction selon la revendication 3, ce dispositif étant caractérisé par le fait que ledit coupleur de prélèvement (KA) est un coupleur à fibres optiques du type réalisé par fusion et étirage.

8. Dispositif d'extraction selon la revendication 3, ce dispositif étant caractérisé par le fait qu'il inclut en outre un ensemble sélecteur d'extraction (RE) disposé sur ladite branche de prélèvement (BE) entre ledit coupleur de prélèvement (KA) et ledit port de sortie d'extraction (PB) pour recevoir ladite fraction prélevée de la lumière d'entrée de ligne, cet ensemble étant commandé pour transmettre sélectivement certains au moins des canaux du multiplex amont.

9. Dispositif d'extraction selon la revendication 3, ladite branche de transit (BT) ayant :
- un sens direct allant du dit coupleur de prélèvement (KA) au dit port de sortie de transit (PT), et
- un sens inverse opposé à ce sens direct,
- deux côtés mutuellement opposés étant définis pour chaque segment de cette branche, ces deux côtés constituant respectivement un côté amont et un côté aval tels que ledit sens direct aille dans ce segment du dit côté amont au dit côté aval,
ce dispositif étant caractérisé par le fait que ledit ensemble réjecteur de transit (RT) inclut en succession selon ledit sens direct et optiquement en série :
- un isolateur optique (Z) apte à éliminer la lumière se propageant dans un sens inverse, et
- une succession de cellules à réflexion sélective raccordées optiquement en série (C1, C2 ... Cn), ces cellules ayant des bandes de réflexion respectives incluant chacune l'un au moins des dits canaux du domaine spectral du dispositif, chaque tel canal inclus dans la bande de réflexion de l'une quelconque de ces cellules constituant un canal associé à cette cellule, chacune de ces cellules pouvant être dans un état actif et dans un état passif, cet état actif imposant à cette cellule de réfléchir la lumière des dits canaux qui lui sont associés et de transmettre la lumière des autres dits canaux du domaine spectral du dispositif, cet état passif imposant à cette cellule de transmettre la lumière de tous les canaux de ce domaine.

10. Dispositif selon la revendication 9, ce dispositif étant caractérisé par le fait que chacune des dites cellules à réflexion sélective est apte à être mise alternativement dans un état actif et dans un état passif, cette cellule étant disposée pour recevoir l'un des dits signaux de commande d'extraction (CE), ce signal étant affecté à cette cellule pour désigner lesdits canaux qui lui sont associés et cette cellule étant agencée pour répondre à ce signal en prenant son dit état actif et pour répondre à l'absence de ce signal en prenant son dit état passif.

11. Dispositif d'extraction selon la revendication 10, les dits canaux du domaine spectral du dispositif formant une suite sensiblement régulière dans le spectre des longueurs d'onde, cette suite constituant une suite spectrale, ledit dispositif étant caractérisé par le fait que l'une au moins des dites cellules à réflexion sélective (C1, C2 ... Cn) est associée à une pluralité de dits canaux du domaine spectral du dispositif, grâce à quoi cette cellule constitue une cellule multicanal (C1, C2 ... Cn), lesdits canaux associés à chaque dite cellule multicanal étant consécutifs dans ladite suite spectrale.

12. Dispositif d'extraction selon la revendication 11, ce dispositif étant caractérisé par le fait que le nombre de dits canaux associés à chaque dite cellule multicanal (C1, C2 ... Cn) est compris entre deux et huit, limites incluses.

13. Dispositif d'extraction selon la revendication 10, ce dispositif étant caractérisé par le fait que chacune des dites cellules à réflexion sélective (C1) inclut :
- des moyens de raccordement par l'intermédiaire desquels cette cellule est raccordée optiquement en série dans ladite succession de cellule, ces moyens constituant un port amont (PM1) et un port aval (PV) situés respectivement des dits cotés amont et aval de cette cellule,
- un guide de lumière (B1) constituant un guide de réflexion et incluant en série un réflecteur de Bragg imposant ladite bande de réflexion de cette cellule,
- un guide de lumière (CC1) constituant un guide de court-circuit, et
- un ensemble de commutation de cette cellule, cet ensemble incluant une partie amont (SM1) et une partie aval (SV1) raccordées respectivement à ces ports amont et aval, cet ensemble étant commandé pour connecter, entre lesdits ports amont (PM1) et aval (PV1) de cette cellule :
- soit ledit guide de réflexion (B1) et mettre ainsi cette cellule dans son dit état actif,
- soit ledit guide de court-circuit (CC1) et mettre ainsi cette cellule dans son dit état passif.

14. Dispositif d'extraction selon la revendication 13, ladite succession de cellules à réflexion sélective (C1, C2 ... Cn) faisant apparaître des paires de cellules constituées chacune de deux cellules (C1, C2) consécutives dans cette succession, ces deux cellules constituant une cellule amont (C1) et une cellule aval (C2) situées des dits cotés amont et aval de cette paire, respectivement,
ledit dispositif étant caractérisé par le fait que, pour chaque dite paire (C1, C2) de cellules à réflexion sélective, ladite partie aval (SV1) de l'ensemble de commutation de la cellule amont (C1) et ladite partie amont (SM2) de l'ensemble de commutation de la cellule aval (C2) sont formées par un commutateur optique du type 2X2 constituant un commutateur de paire (S1-2) affecté à cette paire et incluant au moins virtuellement ledit port aval de cette cellule amont et ledit port amont de cette cellule aval.

15. Dispositif d'extraction et d'insertion de canal pour système de transmission optique à multiplex de longueurs d'onde, ce dispositif étant caractérisé par le fait qu'il inclut un dispositif d'insertion de canal selon l'une quelconque des revendications 4 à 14, ce dispositif d'extraction et d'insertion incluant en outre :
- un port d'entrée d'insertion (PC) pour recevoir une lumière d'entrée d'insertion portant un groupe d'insertion constitué par certains au moins des dits canaux du groupe d'extraction,
- un coupleur d'insertion (KB) alimenté à la fois à partir de ce port d'entrée d'insertion et à partir du dit port de sortie de transit (PT), et
- un port de sortie de ligne (PD) alimenté à partir de ce coupleur d'insertion pour fournir en sortie du dit dispositif d'extraction et d'insertion une lumière de sortie de ligne portant un multiplex aval constitué par les dits groupes de transit et d'insertion.
